# EUROPEAN PATENT APPLICATION

(11) **EP 2 317 113 A1**
(43) Date of publication of application: **04.05.2011**
(21) Application number: 09174914.3
(22) Date of filing: 03.11.2009
(51) Int. Cl.: F02M 25/08, B01D 53/04

(54) **Evaporative Canister**

(71) Applicant: Delphi Technologies, Inc., Troy, MI 48007 (US)
(72) Inventor: Bojkowski, Maciej G., 30-438, Krakow (PL); Jasinski, Jan, 31-548, Krakow (PL); Mroz, Leszek, 40-139, Katowice (PL)
(74) Representative: Robert, Vincent

(57) **Abstract**

A canister for an evaporative emission system for use in motor vehicle comprises a hollow body having a first extremity provided with an inlet port and a second extremity provided with an outlet port. The line joining the inlet port to the outlet port defines a direct route inlet-outlet which is naturally followed by the vapors entering through the inlet port and exiting through the outlet port. The canister comprises, inside the hollow body, at least one layer of absorbent material as well as one distribution mean positioned between the absorbent material and the inlet port. The distribution mean forces the vapors entering the canister through the inlet port to spread radially relative to the direct route inlet-outlet for a better usage of the absorbent material. The distribution mean comprises an inlet screen of foam extending throughout the cross section of the hollow body. The inlet screen has an inlet area facing the inlet port and a peripheral area surrounding the inlet area. The thickness and the density of the foam in the inlet area, with regards to the thickness and density of the foam in the peripheral area, is configured such that the vapors entering the canister go more easily through the peripheral area than through the inlet area.

## Description

### TECHNICAL FIELD

This invention relates to a canister for reducing the loss of vaporizing fuel.

### BACKGROUND OF THE INVENTION

A canister having a fuel vapor inlet port and a purge port on one side of a chamber accommodating activated carbon and an atmospheric air port on the other side has been conventionally used as an apparatus for reducing fuel vapor loss which contains activated carbon for absorbing fuel vapor generated in such portions of a fuel system as a fuel tank during the shut-down state of an engine and which supplies the absorbed fuel vapor to the engine when the operation of the engine recommences.

It is important for this type of canister to diffuse the fuel vapor which is to be absorbed over the entire region of an activated carbon chamber in order to increase the efficiency of adsorption and separate the absorbed fuel vapor from the absorbent as completely as possible so as to increase the efficiency of reabsorption.

Developments have improved the efficiency of the canister. Means for diffusing fuel vapor by using a baffle plate having apertures disposed in a fuel vapor passage and means for separating absorbed fuel from an absorbent, and having a suitable gap between the absorbent layers and the atmospheric air port to ensure that the atmospheric air introduced from the atmospheric air port flows through this gap into the absorbent layers have both been previously proposed.

In US 4750923, Haruta proposes a first deflector giving to the fuel vapor flowing into the canister a swirling movement and a second deflector for distributing the air which flows toward the canister for purging the vapor.

It is an object of the present invention to improve the conventional type of such a canister with respect to the efficiency and simplification of construction. SUMMARY OF THE INVENTION

The object of the present invention is to improve the efficiency and simplify the construction of conventional canisters by proposing a design, comprising a multi layer foam screen. The use of two different density foams assures a restriction difference on the screen and improves the air flow in all cross section of the canister chamber.

The present invention is relative to a canister for an evaporative emission system for use in motor vehicle. The canister comprises a hollow body having a first extremity provided with an inlet port and a second extremity provided with an outlet port. The line joining the inlet port to the outlet port defines a direct route inlet-outlet which is naturally followed by the vapors entering through the inlet port and exiting through the outlet port. The canister comprises, inside the hollow body, at least one layer of absorbent material as well as one distribution mean positioned between the absorbent material and the inlet port. The distribution mean forces the vapors entering the canister through the inlet port to spread radially relative to the direct route inlet-outlet for a better usage of the absorbent material. The distribution mean comprises an inlet screen of foam extending throughout the cross section of the hollow body. The inlet screen has an inlet area facing the inlet port and a peripheral area surrounding the inlet area. The thickness and the density of the foam in the inlet area, with regards to the thickness and density of the foam in the peripheral area, is configured such that the vapors entering the canister go more easily through the peripheral area than through the inlet area.

Advantageously, the foam of inlet area has a higher density than in the peripheral area.

One possibility is that the foam of the inlet screen has a continuously decreasing density from the area facing the inlet port to the periphery of the inlet screen.

An alternative is that the inlet screen of foam is thicker in the area of the inlet port than in its periphery.

Additionally, the canister is provided with an outlet screen of foam positioned inside the hollow body between the absorbent material and the outlet port. The outlet screen has an outlet area facing the outlet port and a peripheral area surrounding the outlet area the thickness. The thickness and density of the foam in the outlet area, with regards to the thickness and density of the foam in the peripheral area, being configured such that the vapors exiting the canister go more easily through the peripheral area than through the outlet area.

Advantageously, the foam of outlet area has a higher density than in the peripheral area.

One possibility is that the foam of the outlet screen has a continuously decreasing density from the outlet area to the peripheral area.

An alternative is that the outlet screen of foam is thicker in the outlet area than in its peripheral.

### BRIEF DESCRIPTION OF THE DRAWINGS

Other advantages of the present invention will be readily appreciated as the same becomes better understood by reference to the following detailed description when considered in connection with the accompanying figures wherein:
Figure 1 is a longitudinal section of a canister as per the present invention.
Figure 2 is a face view of a inlet foam screen.
Figure 3 is a face view of a outlet foam screen.
Figure 4 is a side view of variable thickness screen.

### DESCRIPTION OF THE PREFERRED EMBODIMENT

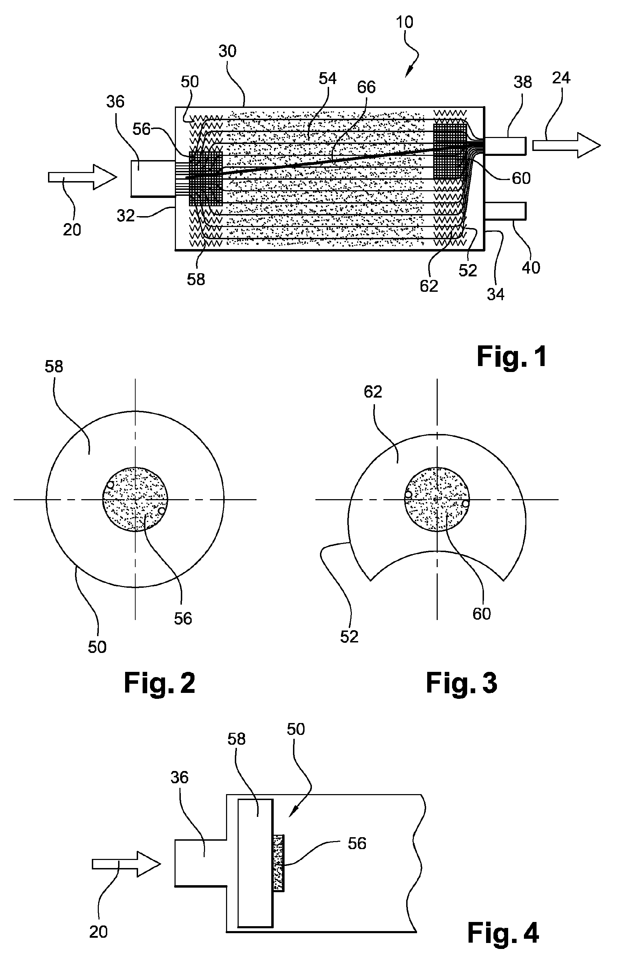

Figure 1 represent a canister 10 comprising a tubular like body 30 provided with an inlet extremity 32 and an outlet extremity 34. The inlet extremity 32 is provided with an inlet port 36 through which vapors enter as an incoming flow 20. The outlet extremity 34 is provided with an outlet port 38 through which vapors exit as an outgoing flow 24. The canister is additionally provided with a tank port 40. Inside the body 30 is placed an inlet foam screen 50 next to the inlet extremity 32 and an outlet foam screen 52 next to the outlet extremity 34. Between the screens 50, 52 is a mass of activated carbon 54 that filters the fuel vapors contained in an incoming flow 20. The incoming flow 20 passes through the activated carbon 54 and exits the canister 10 via the outlet port 38 as an outgoing flow 24. A shortest distance line joining the inlet port 36 to the outlet port 38 is called the direct route 66. While going from the inlet port 36 to the outlet port 38, the vapors naturally follow the direct route 66, thus saturating in vapors the activated carbon 54 that is on that natural path. To overcome this deficiency, the inlet foam screen 50 comprises an inlet area 56 facing the inlet port 36 and a peripheral area 58. The inlet area 56 has higher density foam than the peripheral area 58. The inlet area 56 forms an obstacle to the incoming flow 20 diverting part of it from the direct route 66 and forcing this part toward the peripheral area of the activated carbon 54.

Similarly, next to the outlet extremity 34, the outlet foam screen 52 comprises an outlet area 62 facing the outlet 38 and a peripheral area 60. The outlet area 62 is of higher density foam than the peripheral area 60. The outlet area 62 forms an obstacle to the flow so the vapors that have entered the canister 10 and have spread across the section of the activated carbon 54 thanks to the inlet foam screen 50, remain spread across, as traversing the activated carbon 54 toward the outlet port 38.

Figure 2 is an example of an inlet foam screen 50 comprising two distinct parts. A peripheral area 58 has the shape of a thick disc holed in the region facing the inlet port 36 and, an inlet area 56 which has the shape of the hole in the peripheral area 58 and is placed in the hole thus creating a complete screen. The foam of the inlet area 56 is of higher density than the foam of the peripheral area 58.

Similarly, as represented in Figure 3, foam screens 50, 52 of various outer contours can be built in two distinct parts, the inlet/outlet area 56, 60 being placed in the hole of a peripheral area 58, 62.

Figure 4 is an alternative embodiment for a inlet foam screen 50, the screen comprising a first layer 58 of foam matching the complete section of the canister 10 and a second layer 56 of foam limited to the inlet port 36 area. The second layer 56 is attached to the first layer 58. The screen 50 presents two layers 56, 58, of foam in the inlet area, and only one layer of foam 58 in the peripheral area this creating the required density variation enabling the homogenization of the vapor flow inside the activated carbon 54. In Figure 4 the second layer 56 limited to the inlet port 36 area is represented between the first layer 58 matching the complete section of the canister 10 and the activated carbon 54.

This multi-layer concept for creating a screen can be implemented both for the inlet screen 50 and for the outlet screen 52. Symmetrically as the representation of Figure 4, the layer 56 limited to the port area can be on either side of the layer 58 against the activated carbon 54 or on the port side.

Also, the example described depicts foam screens 50, 52 with two distinct areas. Screens provided with continuously variable density foam, or a continuously variable thickness, radially decreasing from the port area to the peripheral area can be implemented with the same effect.

Thanks to this variable density foam screen, the incoming vapors are better distributed across the activated carbon 54. Part of the vapors follows the direct route inlet-outlet 66 while other part traversing the activated carbon 54 in the peripheral area.

## Claims

1. A canister (10), for an evaporative emission system for use in motor vehicle, comprising a hollow body (30) having a first extremity (32) provided with an inlet port (36) and a second extremity (34) provided with an outlet port (38), the line joining the inlet port (36) to the outlet port (38) defining a direct route (66) inlet-outlet which is naturally followed by the vapors entering (20) through the inlet port (36) and exiting through the outlet port (38); the canister (10) comprising inside the hollow body (30) at least one layer of absorbent material (54) as well as one distribution mean (50) positioned between the absorbent material (54) and the inlet port (36), the distribution mean (50) forcing the vapors (20) entering the canister (10) through the inlet port (34) to spread radially relative to the direct route (66) inlet-outlet for a better usage of the absorbent material (54),
**characterized in that** the distribution mean (50) comprises an inlet screen of foam (50) extending throughout the cross section of the hollow body (30), the inlet screen (50) having an inlet area (56) facing the inlet port (36) and a peripheral area (58) surrounding the inlet area (56), the thickness and the density of the foam in the inlet area (56), with regards to the thickness and density of the foam in the peripheral area (58), being configured such that the vapors (20) entering the canister (10) go more easily through the peripheral area (58) than through the inlet area (56).

2. A canister (10) as set in claim 1 **characterized in that** the foam of inlet area (56) has a higher density than in the peripheral area (58).

3. A canister (10) as set in any of the claim 1 or 2 **characterized in that** the foam of the inlet screen (50) has a continuously decreasing density from the area facing the inlet port (36) to the periphery (58) of the inlet screen (50).

4. A canister (10) as set in any of the preceding claim **characterized in that** the inlet screen (50) of foam is thicker in the area of the inlet port (36) than in its periphery (58).

5. A canister (10) a set in any of the preceding claim **characterized in that** it is provided with an outlet screen (52) of foam positioned inside the hollow body (30) between the absorbent material (54) and the outlet port (38), the outlet screen (52) having an outlet area (60) facing the outlet port (38) and a peripheral area (62) surrounding the outlet area (60) the thickness and the density of the foam in the outlet area (60), with regards to the thickness and density of the foam in the peripheral area (62), being configured such that the vapors (20) exiting the canister (10) go more easily through the peripheral area (62) than through the outlet area (60).

6. A canister (10) as set in claim 5 **characterized in that** the foam of outlet area (60) has a higher density than in the peripheral area (62).

7. A canister (10) as set in any of the claim 5 or 6 **characterized in that** the foam of the outlet screen (52) has a continuously decreasing density from the outlet area (60) to the peripheral area (62).

8. A canister (10) as set in any of the claim 5 to 7 **characterized in that** the outlet screen (52) of foam is thicker in the outlet area (60) than in its peripheral (62).
